(19) Europäisches Patentamt
European Patent Office
Office européen des brevets

(11) **EP 0 920 120 B1**

(12) **EUROPÄISCHE PATENTSCHRIFT**

(45) Veröffentlichungstag und Bekanntmachung des Hinweises auf die Patenterteilung:
**30.03.2011 Patentblatt 2011/13**

(51) Int Cl.:
*H02P 27/04* (2006.01)    *H02K 33/12* (2006.01)
*B29C 65/06* (2006.01)    *B23K 20/10* (2006.01)

(21) Anmeldenummer: **98122379.5**

(22) Anmeldetag: **25.11.1998**

(54) **Verfahren und Vorrichtung zur Regelung der Bewegungsbahn des Werkstückaufnahmekopfes eines Orbital-Vibrationsschweisssystems**

Method and apparatus for controlling the movement path of the workpiece supporting head of an orbital vibration welding system

Procédé et appareil pour contrôler la trajectoire du mouvement de la tête support des pièces à travailler d'un système de soudage à vibration orbitale

(84) Benannte Vertragsstaaten:
**DE FR**

(30) Priorität: **27.11.1997 DE 19752707**

(43) Veröffentlichungstag der Anmeldung:
**02.06.1999 Patentblatt 1999/22**

(73) Patentinhaber: **Bonfiglioli Vectron GmbH**
**47807 Krefeld (DE)**

(72) Erfinder: **Wiesemann, Joachim Dr.**
**45881 Gelsenkirchen (DE)**

(74) Vertreter: **Heyer, Volker et al**
**Bockhorni & Kollegen**
**Elsenheimerstrasse 49**
**80687 München (DE)**

(56) Entgegenhaltungen:
**EP-A- 0 504 494**

• **KLOS W: "NEUE WEGE BEIM VIBRATIONSSCHWEISSEN NEW PATHWAYS FOR VIBRATION WELDING" KUNSTSTOFFE, CARL HANSER VERLAG. MUNCHEN,DE, Bd. 84, Nr. 10, 1. Oktober 1994 (1994-10-01), Seiten 1464-1466,1468-1, XP000468219 ISSN: 0023-5563**

**Beschreibung**

Die Erfindung bezieht sich auf ein Verfahren zur Regelung der Bewegungsbahn des Werkstückaufnahmekopfes eines Orbital-Vibrationsschweißsystems gemäß dem Oberbegriff des Anspruchs 1 sowie auf eine Vorrichtung zur Durchführung dieses Verfahrens gemäß dem Oberbegriff des Anspruchs 11.

Vibrationsschweißgeräte für Werkstücke, insbesondere aus Kunststoff, bringen durch Druck und schnelle Bewegung der zu verschweißenden Werkstücke gegeneinander die Kontaktflächen zwischen diesen zum Aufschmelzen, um so eine Verschweißung ohne zusätzliche Materialzugabe zu erreichen. Die Frequenz dieser mechanischen Bewegung liegt in der Großenordnung von einigen 100 Hz. Meist wird für die Erzeugung der Bewegung ein System aus einer beweglichen ferromagnetischen Masse, die zwischen Federn gelagert ist, und mehreren Elektromagneten zur Anregung der Bewegung verwendet. Das System wird üblicherweise in der Nähe seiner mechanischen Resonanzfrequenz betrieben.

Bisher werden im wesentlichen Vibrationsschweißgeräte eingesetzt (DE 25 39 167 C3, US 3,920,504), deren Bewegung nur in einer Achse erfolgt (Linear-Vibrationsschweißsysteme). Hier ist nur eine Amplitudenregelung nötig, da die Bewegungsbahn durch den mechanischen Freiheitsgrad und den Zeitverlauf der Bewegung durch das mechanische Resonanzsystem festgelegt wird. Die Schweißnähte zeigen aber immer einen sichtbaren Austrieb in Richtung der Bewegung. Außerdem kommt die Bewegung an den beiden Umkehrpunkten jedesmal zum Stillstand, wodurch die mittlere Geschwindigkeit sinkt.

Daher wurden Vibrationsschweißgeräte entwickelt (EP 0 504 494 A2, US 5,160,393), deren mechanische Bewegung in erster Näherung eine Kreisbahn ist (Orbital-Vibrationsschweißsysteme). Mit diesen kann ein geringerer Austrieb an der Schweißnaht erreicht werden, da sich dieser gleichmäßig am Umfang der Kontaktfläche verteilt. Außerdem kann die gleiche mittlere Geschwindigkeit und somit Wärmeleistung mit einer um 29% geringeren (1/√2-fachen) Amplitude als bei linearen Systemen erreicht werden. Zur Speisung der Elektromagneten werden handelsübliche Frequenzumrichter eingesetzt, die auch die Regelung der Bewegungsamplitude übernehmen (DE 25 39 167).

Da die Bahnkurve der Bewegung wesentlich durch das mechanische System vorgegeben ist, stellt sich nur dann eine Kreisbahn ein, wenn sowohl die Haltewerkzeuge als auch die zu verschweißenden Werkstücke bezüglich der Bewegungsachse nahezu rotationssymmetrisch sind. Dies ist im allgemeinen nicht der Fall. Bei nicht rotationssymmetrischen Werkstücken bildet sich daher eine elliptische Bahnkurve aus, durch welche die Vorteile des Orbitalschweißens bei solchen Werkstücken nicht oder nur zum Teil genutzt werden können. Daher ist eine aktive Regelung der Bewegungsbahn nötig.

Der Erfindung liegt die Aufgabe zugrunde, ein Verfahren zur Regelung der Bewegungsbahn unabhängig von der sich durch die freie Bewegung des mechanischen Systems einstellenden Bahnkurve anzugeben. So sollen bei nichtrotationssymmetrischen Werkstücken Kreisbahnen, aber auch frei vorbestimmbare elliptische Bahnkurven einregelbar sein.

Erfindungsgemäß wird die Aufgabe mit einem Verfahren gelöst, das die im Patentanspruch 1 angegebenen Merkmale aufweist. Zur erfindungsgemäßen Lösung der Aufgabe ist auch eine Vorrichtung mit den Merkmalen des Patentanspruchs 11 vorgesehen.

Die mit der Erfindung erzielbaren Vorteile bestehen insbesondere darin, dass durch die erfindungsgemäßen Maßnahmen auch bei nicht rotationssymmetrischen Werkstücken ohne apparativen Zusatzaufwand eine kreisförmige Bewegung erreicht werden kann. Es können handelsübliche Frequenzumrichter zum Ansteuern der Elektromagnete verwendet werden, deren Mikrokontroller eine zusätzliche Regelaufgabe erhält.

Weil einem Resonanzsystem - wie es die an Federn aufgehängte Masse des Werkstückaufnahmekopfes eines Orbitalwelders darstellt - nur unter extrem großem Leistungsaufwand eine Bewegung eingeprägt werden kann, die weit von seiner Resonanz sonanz entfernt ist, bieten sich als sinnvolle Bahnkurven, die mit einem vertretbaren Aufwand (Bauleistung des Stellgliedes) erreichbar sind, ellipsenförmige Bahnen inklusive ihrer beiden Extremformen Kreis und lineare Bewegung an. Alle diese Bahnkurven lassen sich als Überlagerung zweier entgegengesetzt rotierender Vektoren gleicher Frequenz darstellen. Wählt man als Frequenz eine Frequenz in der Nähe der Resonanzfrequenz, so lassen sich die genannten Bahnkurven ohne Überdimensionierung der Bauleistung des Frequenzumrichters einprägen.

Zusätzlich besteht die bisher nicht vorhandene Möglichkeit bei speziellen Schweißaufgaben eine gewünschte parametrierbare ellipsenförmige Bewegung einzustellen. Da diese Ellipse auch den linearen Sonderfall beinhaltet, können mit nur einem Gerät sowohl Orbital- als auch Linear-Schweißaufgaben bewältigt werden.

So kann mit der erfindungsgemäßen Regelung eine lineare Schwingung in einer frei einstellbaren Achse erreicht werden, um mit einem Orbital-Vibrationsschweißsystem auch Werkstücke zu verschweißen, die nur mit einem linearen System schweißbar sind. Dies war mit bisherigen Verfahren nicht erreichbar.

Die Möglichkeit, die Bahnkurve der Bewegung zu regeln, bietet einen zusätzlichen Nutzeffekt dadurch, daß bewußt von der Kreisbahn abgewichen werden kann, um mit einer elliptischen Bahnkurve den Austrieb (im wesentlichen) an Stellen zu erzeugen, die beim fertigen Werkstück nicht sichtbar bzw. nicht störend sind.

Vorteilhafte Ausgestaltungen der Erfindung sind in den Unteransprüchen gekennzeichnet.

Die Erfindung wird nachstehend anhand der in den Zeichnungen dargestellten Ausführungsbeispiele erläutert.

Es zeigen:

Fig. 1 eine prinzipielle Anordnung des elektromechanischen Systems eines Orbitalwelders im mechanischen Koordinatensystem,

Fig. 2 eine prinzipielle Anordnung des elektrischen Systems des Orbitalwelders im elektrischen Koorinatensystem,

Fig. 3 den gesamten Regelkreis mit Regler, Stellglied, Regelstrecke und Meßwerterfassung,

Fig. 4 einen Regler für die Bahnkurvenregelung,

Fig. 5 Ortskurven des Spannungsraumzeigers für verschiedene Modulationsgrade,

Fig. 6 Ortskurven des Spannungsraumzeigers für verschiedene Winkelargumente des Modulationsfaktors,

Fig. 7A Ortskurven von Soll- und Istwert und,

Fig. 7B Ortskurven der daraus gebildeten Regelabweichung in ständerfesten und rotierenden Koordinaten, und

Fig. 8 Bildung des Spannungsraumzeigers durch Addition eines Grundschwingungsraumzeigers und eines Oberschwingungsraumzeigers mit 3-facher Frequenz.

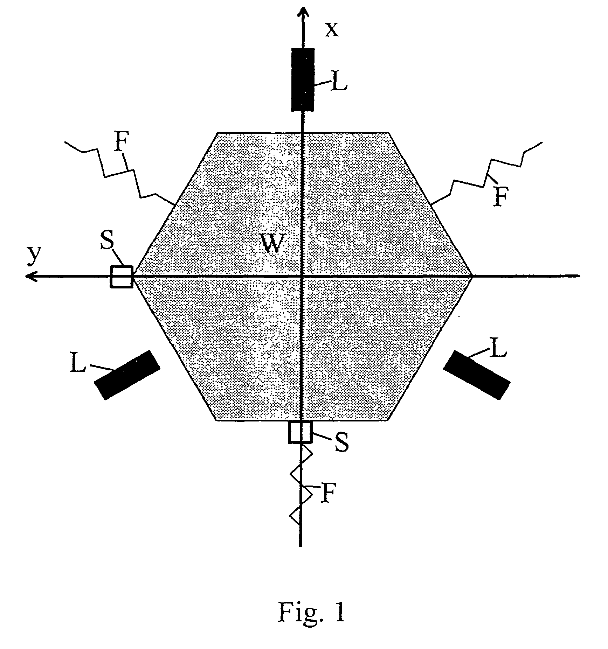

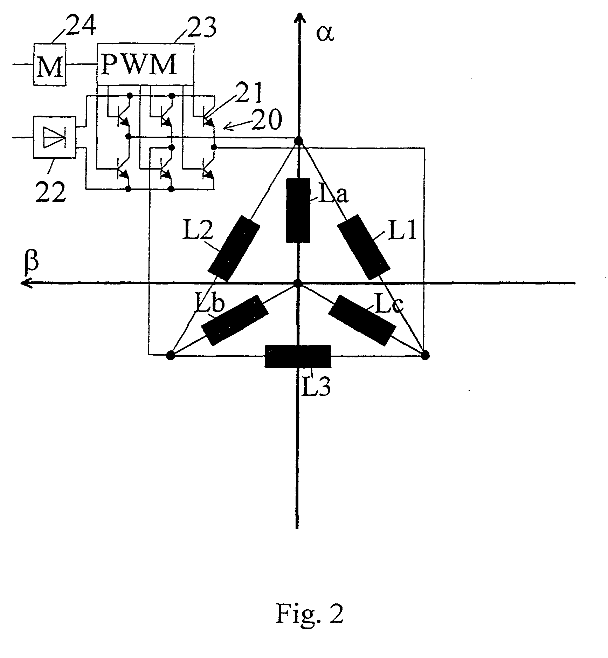

In Fig. 1 ist der prinzipielle mechanische Aufbau stark vereinfacht dargestellt. Der Werkstückaufnahmekopf W wird durch Federn F in seiner Ruhelage gehalten und kann um diese Ruhelage mit der mechanischen Resonanzfrequenz frei schwingen. Die mechanischen Anschläge, welche die Amplitude dieser Bewegung in jeder Richtung begrenzen, sind hier nicht gezeigt. Zur Anregung der gewünschten Bewegung sind Elektromagneten L vorhanden. Die Bewegung wird mit zwei Sensoren S erfaßt. Das mechanische X/Y-Koordinatensystem ist so ausgerichtet, daß die obere Spule L eine Kraft in Richtung der positiven X-Achse ausübt. Der Rotationssinn der Spulen L im mechanischen Koordinatensystem ist identisch mit dem im elektrischen Koordinatensystem (Fig. 2).

In Fig. 2 ist die Anordnung und Verschaltung der Spulen L der Elektromagneten im elektrischen Koordinatensystem dargestellt. Sind die Spulen elektrisch in Sternschaltung verbunden, werden sie als La, Lb und Lc bezeichnet und sind wie in Fig. 2 gezeigt im elektrischen Koordinatensystem ausgerichtet. Sind die Spulen elektrisch in Dreieckschaltung verbunden, werden sie als L1, L2 und L3 bezeichnet und sind wie in Fig. 2 gezeigt im elektrischen Koordinatensystem ausgerichtet. Die Koordinatenachsen werden zur Unterscheidung vom mechanischen System mit $\alpha$ und $\beta$ bezeichnet.

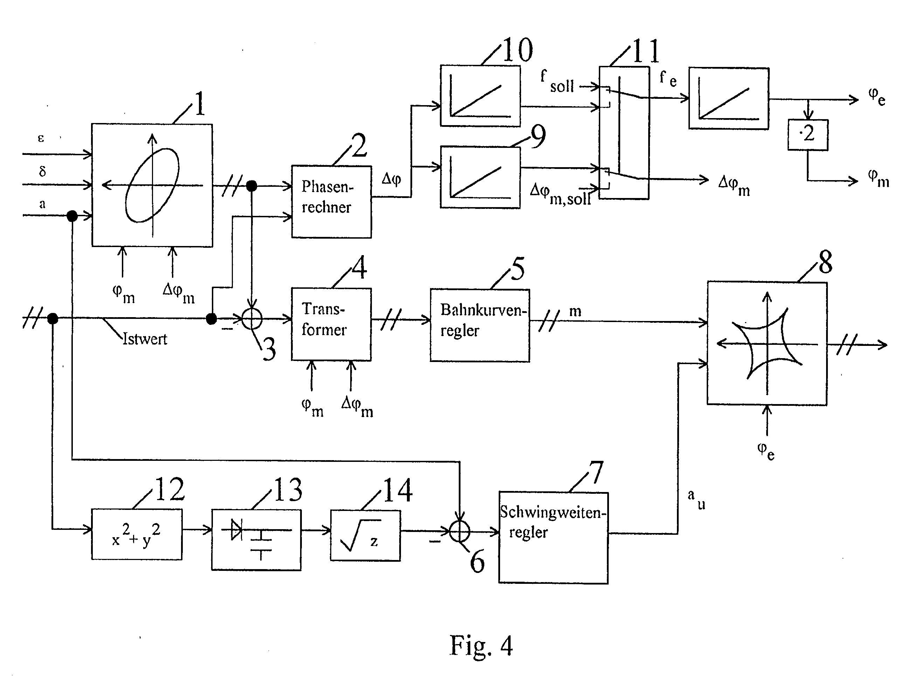

Die Spulen L sind also entweder in Dreieckschaltung oder Sternschaltung an einen Frequenzumrichter 20 angeschlossen, dessen Ventile 21 mit einem netzgespeisten Gleichrichter 22 verbunden sind. Die Ansteuerung der Ventile erfolgt von einer PWM-Stufe 23, die pulsweitenmodulierte Signale liefert, um innerhalb einer bestimmten Schaltperiode (Frequenz) das Verhältnis zwischen Ein- und Ausschaltzeit der Ventile 21 zu verändern. Die Ansteuerung mit Pulsweiten-Modulation ist bekannt und wird deshalb nicht weiter erläutert. Ferner ist die Pulsweiten-Modulation auch nur als Beispiel zu verstehen und kann durch andere Ansteuerungsarten ersetzt werden. Die PWM-Stufe 23 wird von einem Mikroprozessor 24 angesteuert, der mit dem Ausgang des in Fig. 4 dargestellten Sollspannungsgenerators 8 verbunden ist. Wenn die Rechenleistung des Mikroprozessors 24 ausreicht, kann dieser auch die Berechnung der gesamten hier dargestellten Regelung übernehmen.

Der Betrag der Kraft eines Elektromagneten auf einen passiven ferromagnetischen Körper (Anker) ist abhängig vom Betrag des Stromes durch die Spule, wobei die Kraft immer eine anziehende Kraft ist, die mit größerem Strombetrag größer wird, unabhängig vom Vorzeichen des Stromes. Der Betrag eines sinusförmigen Stromes schwingt mit der doppelten Frequenz wie der Strom selbst. Außerdem ist der Rotationssinn des elektrischen und des mechanischen Systems durch ebendiese Betragsfunktion entgegengesetzt: Ein in mathematisch positiven Sinn rotierender Stromraumzeiger (im elektrischen System) bewirkt einen in mathematisch negativem Sinn rotierenden Kraftvektor (im mechanischen System) doppelter Frequenz. Dies hat zur Folge, daß die Frequenz des elektrischen Systems halb so groß sein muß wie die mechanische Resonanzfrequenz.

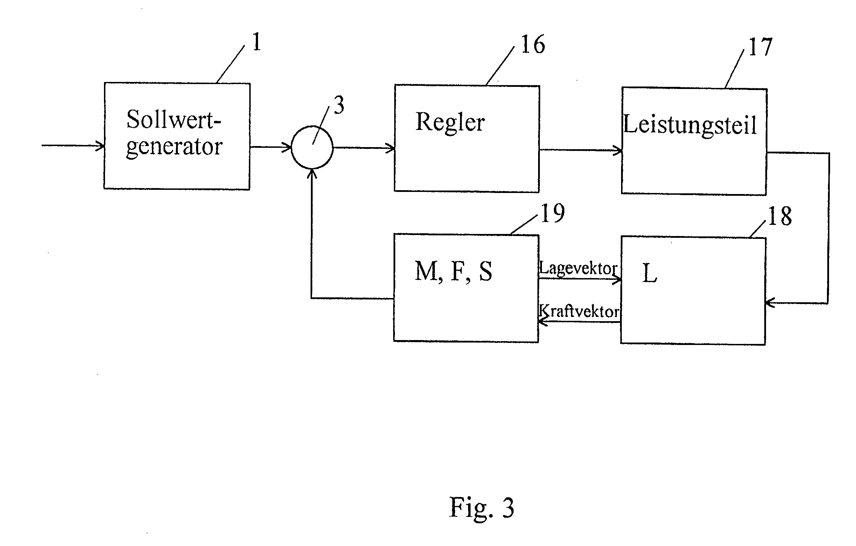

In Fig. 3 ist der gesamte Regelkreis schematisch dargestellt. Vom Anwender werden als Sollwerte die Parameter der gewünschten Bewegungsellipse vorgegeben. Aus diesen Sollparametern werden in einem Sollwertgenerator 1 jeweils die aktuellen Koordinaten des Bewegungsvektors (Vektor der Bewegungsbahn) berechnet. Diese werden in 3 mit den gemessenen Istwerten verglichen. Die so gefundene Regelabweichung wird einem Regler 16 übergeben, der den benötigten Spannungsraumzeiger berechnet. Dieser Sollspannungsraumzeiger wird dann dem Stellglied-Leistungsteil 17 übergeben, der aus den in Fig. 2 dargestellten Komponenten 20 bis 24 besteht und der die gewünschte Ausgangsspannung zur Ansteuerung der Spulen L moduliert.

Die Regelstrecke selbst kann gedanklich in zwei hintereinander geschaltete Blöcke zerlegt werden. Der erste Block 18 symbolisiert das elektrische System mit den Spulen L, in dem der elektromagnetische Kraftvektor erzeugt wird. Der zweite Block 19 symbolisiert das mechanische System mit seiner trägen Masse M, den Federn F, der Dämpfung durch die Last und den Sensoren S. Diese liefern die Istwert-Koordinaten des Bewegungsvektors an den Regler, so daß ein geschlossener Regelkreis entsteht. Durch die sich abhängig vom Lagevektor des mechanischen Systems verändernden Luftspalte der Spulen L gibt es eine direkte Rückwirkung des mechanischen Systems auf das elektrische System.

In Fig. 4 ist ein Regler für die Bahnkurvenregelung dargestellt. Dieser umfaßt die in Fig. 3 gezeigten Blöcke Sollwertgenerator 1 und Regler 16. Der Sollwertgenerator 1 berechnet aus den Ellipsenparametern, nämlich dem Amplitudenscheitelwert a, der Elliptizität $\varepsilon$ und der Ellipsenlage $\delta$ die Augenblickswerte des Soll-Bewegungsvektors in mechanischen Koordinaten. Wie bereits erläutert, schwingen die Soll- und Istwerte des mechanischen Systems mit der doppelten Frequenz des elektrischen Systems. In komplexer Darstellung lautet die Beziehung wie folgt:

$$\vec{Z}_{soll} = a\left(\frac{1-\varepsilon}{2}e^{-j\varphi_m - \Delta\varphi_m} + \frac{\varepsilon}{2}e^{j\varphi_m - \Delta\varphi_m}\right)e^{j\delta} \text{ mit } \varphi_m = 2\pi f_m t$$

Die Größe $\varphi_m$ ist die Winkellage des Sollbewegungsvektors im mechanischen Koordinatensystem bei Bewegung auf einer Kreisbahn, nämlich das Produkt Kreisfrequenz $\omega$ (Schwingungsfrequenz $f_m$) und der Zeit t. Der Ausdruck $\Delta\varphi_m$ bestimmt eine Abweichung der Winkellage $\varphi_m$ zum Zeitpunkt t = 0, die dadurch zustande kommt, daß das mechanische System gegenüber dem elektrischen System zeitverzögert ist. Diese Werte $\varphi_m$ und $\Delta\varphi_m$ für die Winkellage werden zur Synchronisierung dem Sollwertgenerator 1 und dem Transformer 4 eingespeist.

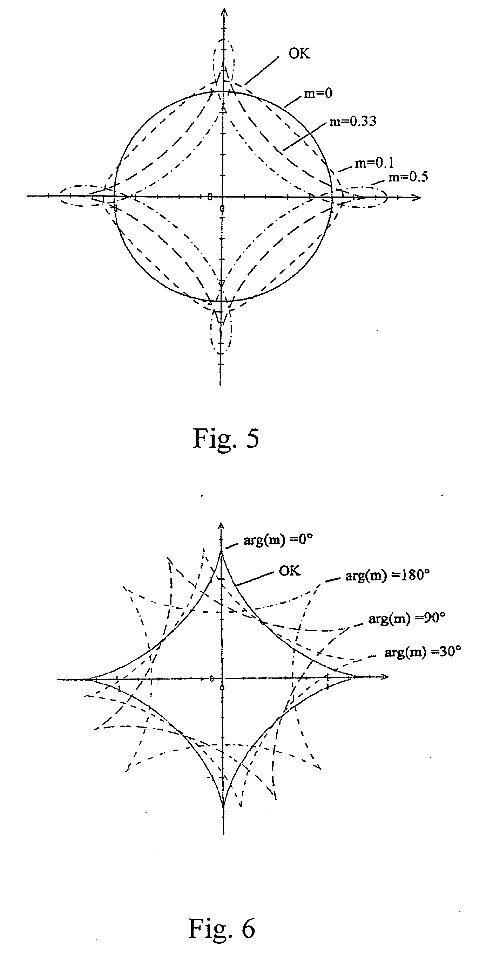

In der Vergleichsstufe 3 wird ein Vergleich von Soll- und Istwert des Bewegungsvektors in mechanischen Koordinaten durchgeführt. Die Regelabweichung wird in einem Koordinatensystemtransformer 4 in ein rotierendes Koordinatensystem transformiert. In diesem rotierenden Koordinatensystem stellt die Abweichung zwischen zwei Ellipsen lediglich eine Konstante dar, der die Amplitudendifferenz als Wechselanteile mit doppelter mechanischer Frequenz überlagert ist. Der dem Transformer 4 nachgeschaltete Bahnkurvenregler 5 kann somit den Bahnfehler ausregeln, ohne durch den Amplitudenfehler zu stark beeinflußt zu werden. Die Ausgangsgröße oder Stellgröße des Bahnkurvenreglers 5 ist ein komplexer Modulationsfaktor m, mit dem die Kurvenform der Spannung bestimmt wird, die im Sollspannungsgenerator 8 erzeugt wird. Der Modulationsfaktor m als Eingangsgröße für den Sollspannungsgenerator 8 bestimmt somit die Bewegungsbahn (elliptisch, kreisförmig oder linear)(entsprechend dem Wert $\varepsilon$) und die Lage der elliptischen bzw. linearen Schwingung im mechanischen Koordinatensystem (entsprechend dem Winkel $\delta$). Dies wird noch anhand der Fig. 5 und 6 erläutert.

Außerdem wird aus dem Istwert des Bewegungsvektors der Amplitudenscheitelwert bestimmt. Hierzu wird in bekannter Weise im Block 12 aus den Meßwerten x und y der Sensoren S der Absolutwert $x^2 + y^2$ bestimmt. Dieser Wert wird im Block 13 gespeichert und dann im Wurzelbildner 14 der Schwingweiten-Istwert gebildet, der in einer Vergleichsstufe 6 mit dem Schwingweiten-Sollwert a verglichen wird. Die Regelabweichung wird einem Schwingweitenregler 7 zugeführt. Dieser bestimmt die Sollamplitude $a_u$ der Ausgangsspannung. Damit wird sichergestellt, daß unabhängig von der aktuellen Form der Bahnkurve der Scheitelwert der Schwingweite nicht größer wird als der Sollwert, so daß ein Anschlagen des Werkstückaufnahmekopfes W an den mechanischen Anschlägen (nicht dargestellt) auch bei dynamischen Vorgängen des Bahnkurvenreglers 5 sicher verhindert wird.

Der Sollspannungsgenerator 8 berechnet aus der Sollamplitude $a_u$ und dem Modulationsfaktor m den Raumzeiger der Sollspannung. Dieser wird im einfachsten Fall aus zwei gegeneinander rotierenden Spannungsraumzeigern zusammengesetzt. Dabei rotiert ein Spannungsraumzeiger mit der Frequenz $f_e$ der elektrischen Grundschwingung, während der zweite Spannungsraumzeiger in umgekehrter Richtung mit der dreifachen Frequenz $3 f_e$ der elektrischen Grundschwingung rotiert. Der Sollspannungsraumzeiger wird durch folgende Gleichung definiert:

$$\vec{u} = a_u\left(e^{j\varphi_e} + m e^{-j3\varphi_e t}\right) \text{mit} \varphi_e = 2\pi f_e t.$$

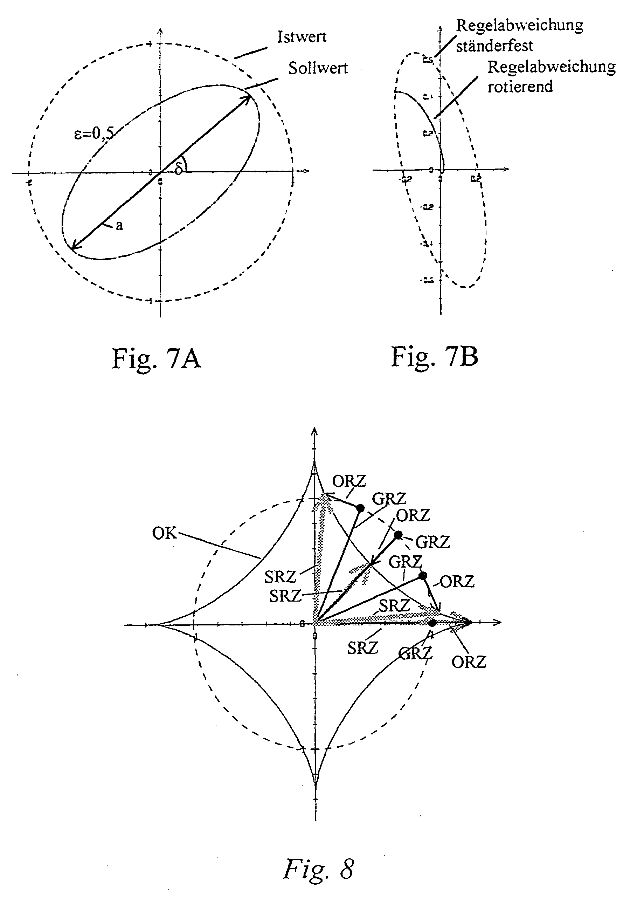

Wie Fig. 8 zeigt, führt diese Modulation des Spannungsraumzeigers zu einer Verzerrung der Ortskurve. In Fig. 8 dreht sich der Raumzeiger GRZ kreisförmig mit der Grundschwingung und dreht sich der Raumzeiger ORZ für die Oberschwingung mit der dreifachen Frequenz. Damit ergibt sich ein Summenraumzeiger SRZ als Summe von Grundschwingungsraumzeiger GRZ und Oberschwingungsraumzeiger ORZ und damit die Ortskurve OK für den Spannungsraumzeiger.

In Fig. 5 sind unterschiedliche Ortskurven des Spannungsraumzeigers für verschiedene Werte des Modulationsfaktor m dargestellt. So ergibt sich für m = 0 eine kreisförmige Bahnkurve. Bei wachsendem Betrag des Modulationsfaktors m ergeben sich kissenförmig verzerrte Ortskurven, die dann im mechanischen System zu immer stärker ausgeprägten elliptischen Bahnkurven führen. Mit einem Modulationsfaktor m = 0,5 läßt sich eine nahezu lineare Schwingung im mechanischen System erzeugen. Der Raumzeiger der Sollspannung kann auch durch Überlagerung weiterer Oberschwingungsraumzeiger zusammengesetzt werden. Damit lassen sich gegebenenfalls eine höhere Dynamik und eine schmälere Kraftellipse erzielen, so daß auch extreme Regelanforderungen erfüllt werden können. Im Normalfall ist aber die Zusammensetzung des Raumzeigers aus der Grundschwingung und der Oberschwingung mit dreifacher Frequenz ausreichend, um allen Anforderungen gerecht zu werden.

Fig. 6 zeigt die sich ergebenden Ortskurven des Spannungsraumzeigers für verschiedene Winkelargumente arg(m) des Modulationsfaktors m bei einem Betrag des Modulationsfaktors m von 0,33. Wie in Fig. 5 ist auch in Fig. 6 die Sollamplitude $a_u = 1$.

Fig. 7A zeigt Ortskurven im mechanischen System. So schwingt das mechanische System beispielsweise auf einer Kreisbahn (Istwert) mit dem Amplitudenscheitelwert a = 1,0 und der Elliptizität $\varepsilon = 0$. Als Sollwert dem Sollwertgenerator 1 vorgegeben ist aber eine elliptische Bahnkurve mit den Parametern a = 0,9, $\varepsilon = 0,5$ und $\delta = 40°$ im mechanischen System. Hieraus wird in Vergleichsstufe 3 die Regelabweichung ermittelt, die in Fig. 7B dargestellt ist. Der Ausgang der Vergleichsstufe 3 liefert somit die ständerfeste Regelabweichung, also die Regelabweichung der stationär angeordneten Spulen L, während von dem Koordinatensystemtransformer 4 die rotierende Regelabweichung erzeugt wird, die dem Bahnkurvenregler 5 zugeführt wird.

Im folgenden soll erläutert werden, wie die Abweichung $\Delta\varphi_m$ der Winkellage des Sollbewegungsvektors korrigiert wird. So wird im Phasenrechner 2 der Fig. 4 aus dem Sollwert und dem Istwert des Bewegungsvektors eine Phasendifferenz $\Delta\varphi$ berechnet. In dieser Phasendifferenz $\Delta\varphi$ ist auch eine Phasenverschiebung $\Delta\varphi_s$ des Systems enthalten (nicht dargestellt). Die Phasenverschiebung $\Delta\varphi s$ rührt davon her, daß das mechanische System auf das elektrische System mit einer Zeitverzögerung antwortet, wie dies bereits erwähnt wurde. Die Folge davon ist, daß die Regelabweichung, die der Bahnkurvenregler 5 ausregeln soll, infolge der systemeigenen Phasenverschiebung $\Delta\varphi_s$ nicht zu Null wird, auch wenn die Ist-Ortskurve gleich der Soll-Ortskurve ist. Um diesen Fehler zu eliminieren, ist ein Phasenregler 9 vorgesehen, von dem die Phasenlage des Soll-Bewegungsvektors im Sollwertgenerator 1 so eingestellt wird, daß der Mittelwert der Phasendifferenz $\Delta\varphi$ zu Null wird. Der Sollwertgenerator 1 erhält deshalb die im Phasenregler 9 ermittelte Abweichung $\Delta\varphi_m$ der Winkellage als Korrekturwert. Zur Durchschaltung des Wertes $\Delta\varphi_m$ ist ein Betriebsartenumsteller 11 vorgesehen, der in diesem Fall auf eine feste Frequenz $f_e = f_{soll}$ eingestellt ist.

In der anderen Lage des Betriebsartenumstellers 11 wird dagegen eine fest vorgegebene Phasenlage $\Delta\varphi_{m,soll}$ für den Sollwert des Bewegungsvektors dem Sollwertgenerator 1 aufgeschaltet. Zur Bildung des Korrekturwertes ist ein Frequenzregler 10 vorgesehen, der die Frequenz des Spannungsraumzeigers so verändert, daß die frequenzabhängige Phasenverschiebung der Regelstrecke den Mittelwert des Phasenfehlers zu Null ergänzt. In diesem Fall ist also $\Delta\varphi_m$ fest vorgegeben und die Winkellage des Sollbewegungsvektors $\varphi_m$ wird verändert und dient als Korrekturwert, der dem Sollwertgenerator 1 aufgeschaltet wird.

Die geschilderte Abstimmung kann während des Regelvorgangs erfolgen (online-tune). So kann bei bekannter optimaler Phasenverschiebung der Regelstrecke die benötigte elektrische Leistung für eine gewünschte Bahnkurve minimiert werden, so daß ein maximaler Wirkungsgrad erreicht wird.

**Patentansprüche**

1. Verfahren zur Regelung der Bewegungsbahn des Werkstückaufnahmekopfes eines Orbital-Vibrationsschweißsystems, bei dem der an Federn (F) befestigte und mit Elektromagneten (L) angetriebene Werkstückaufnahmekopf (W) in einer Schwingungsebene in orbitale Schwingungen zum Verschweißen von Werkstücken, insbesondere aus Kunststoff, versetzt wird, wobei die Elektromagneten (L) durch einen Frequenzumrichter (20) gespeist werden, wobei die Ortskurve (OK) des Spannungsraumzeigers des das elektromechanische System speisenden Frequenzumrichters (20) so verstellt wird, daß die gewünschte elliptische Bewegungsbahn erreicht wird **dadurch gekennzeichnet, daß** der Istwert des Bewegungsvektors und die Bewegungsbahn mit Hilfe von mindestens zwei nicht in einer Achse liegenden Beschleunigungs-, Geschwindigkeits- oder Ortssensoren (S) erfaßt wird und die Bewegungsbahn aufgrund dieser Meßwerte geregelt wird.

2. Verfahren nach Anspruch 1, **dadurch gekennzeichnet, daß** die elliptische Bewegungsbahn die beiden Extremfalle einer Ellipse, nämlich symmetrische Kreisbahn und lineare Schwingung in einer Achse beinhaltet.

3. Verfahren nach einem der Ansprüche 1 oder 2, **dadurch gekennzeichnet, daß** der Spannungsraumzeiger durch Überlagerung eines mit der Grundfrequenz, die ungefähr gleich der halben mechanischen Resonanzfrequenz ist, umlaufenden Spannungsgrundschwingungsraumanzeigers (GRZ) und mindestens einem Oberschwingungsraumzeiger (ORZ) einstellbarer Amplitude und Phasenlage zusammengesetzt ist.

**4.** Verfahren nach einem der Ansprüche 1 bis 3, **dadurch gekennzeichnet, daß** der Scheitelwert des Spannungsraumzeigers von einem von der Bahnregelung unabhängigen Schwingweitenregler (7) geregelt wird, der den Betragsscheitelwert der gemessenen Bewegungsbahn als Istwert und den Betragsscheitelwert der gewünschten Bewegungsbahn als Sollwert verwendet.

**5.** Verfahren nach Anspruch 3 oder 4, **dadurch gekennzeichnet, daß** die Amplituden und Phasenlagen der Oberschwingungen als Funktion eines komplexen Modulationsfaktors m so berechnet werden, daß sich eine ellipsenförmige Ortskurve des Kraftvektors ergibt, deren Verhältnis von großer Achse zu kleiner Achse mit steigendem Betrag von m größer wird und deren Ausrichtung (Winkellage des Scheitelwertes in mech. Koordinaten) eine lineare Funktion des Winkelargumentes des Modulationsfaktors ist.

**6.** Verfahren nach einem der Ansprüche 1 bis 5, **dadurch gekennzeichnet, daß** ein Sollwertgenerator (1) mit einstellbarer Phasenlage einen Bewegungssollwertvektor erzeugt, dessen Ortskurve so parametrierbar ist, daß sie eine beliebige Ellipse darstellen kann.

**7.** Verfahren nach Anspruch 6, **dadurch gekennzeichnet, daß** der Bewegungssollwertvektor mit dem gemessenen Bewegungsistwertvektor verglichen wird und der Differenzvektor in ein rotierendes Koordinatensystem mit einstellbarer Phasenlage transformiert wird.

**8.** Verfahren nach Anspruch 7, **dadurch gekennzeichnet, daß** in dem rotierenden Koordinatensystem ein zweidimensionaler Regler (5) arbeitet, der einen komplexen Modulationsfaktor m als Stellgröße hat, welcher die dem Spannungsgrundschwingungsraumzeiger überlagerten Oberschwingungen bestimmt.

**9.** Verfahren nach einem der Ansprüche 6 bis 8, **dadurch gekennzeichnet, daß** die Phasenlage des Sollwertgenerators ($\Delta\varphi m$) so eingestellt wird, daß der Mittelwert des Phasenfehlers ($\Delta\varphi$) zwischen Soll- und Istwert des Bewegungsvektors Null ist.

**10.** Verfahren nach einem der Ansprüche 6 bis 8, **dadurch gekennzeichnet, daß** die Phasenlage des Soll-Bewegungsvektors fest vorgegeben wird und die Frequenz ($f_e$) des Spannungsraumzeigers ($\Delta\varphi m$) so verstellt wird, daß der Mittelwert des Phasenfehlers ($\Delta\varphi$) zwischen Soll- und Istwert des Bewegungsvektors Null ist.

**11.** Vorrichtung zur Durchführung des Verfahrens nach einem der Ansprüche 1 bis 8 mit einem an Federn befestigten und mit Elektromagneten angetriebenen Werkstückaufnahmekopf, der in einer Schwingungsebene in orbitale Schwingungen zum Verschweißen von Werkstücken, insbesondere aus Kunststoff, versetzbar ist und einem die Elektromagneten speisenden Frequenzumrichter, wobei die Ortskurve des Spannungsraumzeigers des das elektromechanische System speisenden Frequenzumrichters so verstellbar ist, daß die gewünschte elliptische Bewegungsbahn erreicht werden kann, **dadurch gekennzeichnet, daß** ein Sollwertgenerator (1) vorgesehen ist, der entsprechend der gewünschten Form der Bewegungsbahnkurve den aktuellen Soll-Bewegungsvektor berechnet, welcher zum einen einem Phasenrechner (2) zugeführt wird und zum anderen einem Soll/Istwertvergleicher (3), welcher durch Subtraktion des mit HiPfe von mindestens zwei nicht in einer achse liegenden Beschleunigungs-, Geschurndigkeits - oder Ortssensoren gemessenen Bewegungsvektors vom Soll-Bewegungsvektor die Regelabweichung des Bahnkurvenreglers bestimmt, welche dann in ein rotierendes Koordinatensystem transformiert (4) wird, in dem der zweidimensionale Bahnkurvenregler (5) arbeitet, der aus der so gebildeten Regelabweichung den benötigten komplexen Modulationsfaktor m berechnet, um die Regelabweichung zu Null zu regeln, daß der Amplitudenscheitelwert des Soll-Bewegungsvektors mit dem Amplitudenscheitelwert des gemessenen Bewegungsvektors verglichen (6) wird und einem Schwingweitenregler (7) zugeführt wird, der die Sollamplitude des Spannungsraumzeigers so bestimmt, daß die Regelabweichung am Eingang des Schwingweitenreglers zu Null wird, daß ein Sollspannungsgenerator (8) aus der Sollamplitude des Spannungsraumzeigers und dem Modulationsfaktor m den aktuellen Spannungsraumzeiger berechnet und einem Leistungsteil (17) zuführt, das die Ausgangsspannung eines Frequenzumrichters so einstellt, daß sie dem gewünschten Spannungsraumzeiger entspricht.

**12.** Vorrichtung zur Durchführung des Verfahrens nach Anspruch 9, **dadurch gekennzeichnet, daß** ein Phasenregler (9) die Phasenlage des Sollwertgenerators ($\Delta\varphi m$) so verstellt, daß der vom Phasenrechner (2) berechnete Phasenfehler ($\Delta\varphi$) im Mittel zu Null wird.

**13.** Vorrichtung zur Durchführung des Verfahrens nach Anspruch 10, **dadurch gekennzeichnet, daß** ein Frequenzregler (10) die Frequenz des Spannungsraumzeigers ($f_e$) so verstellt, daß der vom Phasenrechner (2) berechnete Phasenfehler ($\Delta\varphi$) im Mittel zu Null wird.

**14.** Vorrichtung zur Durchführung des Verfahrens nach Ansprüchen 12 und 13, **dadurch gekennzeichnet, daß** mit einer Betriebsartenumschaltung (11) zwischen den beiden Regelungen nach Anspruch 12 und Anspruch 13 im Betrieb und außer Betrieb gewechselt werden kann.

**Claims**

**1.** A Method for controlling the movement path of the workpiece supporting head of an orbital vibration welding system, in which the workpiece supporting head (W) fastened on springs (F) and driven with electromagnets (L) is displaced in an oscillation plane into orbital vibrations for the welding of workpieces, in particular made of plastic, wherein the electromagnets (L) are powered by a frequency converter (20), wherein the locus (OK) of the voltage space vector of the frequency converter (20) powering the electromechanical system is shifted such that the desired elliptical movement path is achieved, **characterized in that** the actual value of the movement vector and the movement path is captured with the help of at least two acceleration, speed or location sensors (S) not lying in one axis and the movement path is controlled based on these measurement values.

**2.** The method according to claim 1, **characterized in that** the elliptical movement path comprises the two extreme cases of an ellipse, namely symmetrical circular path and linear vibration in one axis.

**3.** The method according to one of claims 1 or 2, **characterized in that** the voltage space vector through superposition of a voltage basic oscillation space vector (GRZ) revolving with a fundamental frequency which is approximately equal to half the mechanical resonance frequency and at least one harmonic oscillation space vector (ORZ) is made up of adjustable amplitude and phase position.

**4.** The method according to one of claims 1 through 3, **characterized in that** the peak value of the voltage space vector is controlled by a vibration amplitude controller (7) independent of the path control, which uses the peak value of the amount of the measured movement path as the actual value and the peak value of the amount of the desired movement path as the setpoint value.

**5.** The method according to claim 3 or 4, **characterized in that** the amplitudes and phase positions of the harmonic oscillations are calculated as a function of a complex modulation factor m such that an elliptical-shaped locus of the force vector results, the ratio of which increases from large axis to small axis with an increasing amount of m and the alignment of which (angular position of the peak value in mechanical coordinates) is a linear function of the angle argument of the modulation factor.

**6.** The method according to one of claims 1 through 5, **characterized in that** a setpoint value generator (1) with adjustable phase position generates a movement setpoint value vector the locus of which can be parameterized such that it can represent any ellipse.

**7.** The method according to claim 6, **characterized in that** the movement setpoint value vector is compared with the measured movement actual value vector and the difference vector is transformed into a rotating coordinate system with adjustable phase position.

**8.** The method according to claim 7, **characterized in that** a two-dimensional controller (5) works in the rotating coordinate system, which has a complex modulation factor m as correcting variable, which determines the harmonic oscillations superposing the voltage basic oscillation space vector.

**9.** The method according to one of claims 6 through 8, **characterized in that** the phase position of the setpoint value generator (($\Delta\varphi$m) is set such that the mean value of the phase error ($\Delta\varphi$m) is zero between the setpoint and the actual value of the movement vector.

**10.** The method according to one of claims 6 through 8, **characterized in that** the phase position of the setpoint movement vector is definitively provided and the frequency ($f_e$) of the voltage space vector ($\Delta\varphi$m) is shifted such that the mean value of the phase error ($\Delta\varphi$) is zero between the setpoint and actual value of the movement vector.

**11.** Apparatus for performing the method according to one of claims 1 through 8 with a workpiece supporting head fastened on springs and driven with electromagnets, which can be displaced in an oscillation plane into orbital vibrations for the welding of workpieces, in particular made of plastic, and a frequency converter powering the electromagnets, wherein the locus of the voltage space vector of the frequency converter powering the electromechanical system can be shifted such that the desired elliptical movement path can be achieved, **characterized in that** a setpoint value generator (1) is provided, which calculates the actual setpoint movement vector according to the desired shape of the movement path curve, which on one hand is supplied to a phase processor (2) and on the other hand to a setpoint/actual value comparator (3), which determines the control deviation of the path curve controller through subtraction of the movement vector measured with the help of at least two acceleration, speed or location sensors not lying in one axis from the setpoint movement vector, which is then transformed into a rotating coordinate system (4), in which the two-dimensional path curve controller (5) works, which calculates the needed complex modulation factor m from the thus-formed control deviation, in order to regulate the control deviation to zero, that the amplitude peak value of the setpoint movement vector is compared with the amplitude peak value of the measured movement vector (6) and is supplied to a vibration amplitude controller (7), which determines the setpoint amplitude of the voltage space vector such that the control deviation at the input of the vibration amplitude controller is zero, that a setpoint voltage generator (8) calculates the actual voltage space vector from the setpoint amplitude of the voltage space vector and the modulation factor m and supplies it to a power element (17), which sets the output voltage of a frequency converter such that it matches the desired voltage space vector.

12. The apparatus for performing the method according to claim 9, **characterized in that** a phase controller (9) shifts the phase position of the setpoint value generator ($\Delta\varphi m$) such that the phase error ($\Delta\varphi$) calculated by the phase processor (2) becomes zero on average.

13. The apparatus for performing the method according to claim 10, **characterized in that** a frequency controller (10) shifts the frequency of the voltage space vector ($f_e$) such that the phase error ($\Delta\varphi$) calculated by the phase processor (2) becomes zero on average.

14. The apparatus for performing the method according to the claims 12 and 13, **characterized in that** with an operation mode switching (11) one can switch between the two controls according to claim 12 and claim 13 in operation and out of operation.

**Revendications**

1. Procédé pour contrôler la trajectoire du mouvement de la tête support des pièces à travailler d'un système de soudage à vibration orbitale, lors duquel la tête support des pièces à travailler (W) fixée à des ressorts (F) et entraînée avec des électroaimants (L) est mise en oscillations orbitales dans un plan d'oscillation pour le soudage de pièces à travailler, notamment en plastique, dans lequel les électroaimants (L) sont alimentés par un changeur de fréquence (20), dans lequel le lieu de transfert (OK) du vecteur spatial de tension du changeur de fréquence (20) alimentant le système électromécanique est réglé, de telle sorte que la trajectoire du mouvement elliptique souhaitée est atteinte, **caractérisé en ce que** la valeur réelle du vecteur de mouvement et la trajectoire du mouvement sont détectées à l'aide d'au moins deux capteurs d'accélération, de vitesse ou local (S) ne se trouvant pas dans un axe et la trajectoire du mouvement est contrôlée en raison de ces valeurs mesurées.

2. Procédé selon la revendication 1, **caractérisé en ce que** la trajectoire du mouvement elliptique contient les deux cas extrêmes d'une ellipse, à savoir une trajectoire circulaire symétrique et une oscillation linéaire dans un axe.

3. Procédé selon l'une quelconque des revendications 1 ou 2, **caractérisé en ce que** le vecteur spatial de tension est composé par superposition d'un vecteur spatial de mode fondamental de tension (GRZ) circulant avec la fréquence de base qui est à peu près égale à la moitié de la fréquence de résonance mécanique, et au moins un vecteur spatial d'oscillation harmonique (ORZ) d'amplitude et de position de phase réglables.

4. Procédé selon l'une quelconque des revendications 1 à 3, **caractérisé en ce que** la valeur de crête du vecteur spatial de tension est contrôlée par un régulateur d'amplitude d'oscillation (7) indépendant du contrôle de trajectoire, qui utilise la valeur de crête absolue de la trajectoire du mouvement mesurée comme valeur réelle et la valeur de crête absolue de la trajectoire du mouvement souhaitée comme valeur de consigne.

5. Procédé selon la revendication 3 ou 4, **caractérisé en ce que** les amplitudes et positions de phase des oscillations harmoniques sont calculées comme fonction d'un facteur de modulation complexe m, de telle sorte qu'un lieu de transfert ellipsoïdal du vecteur de force en résulte, dont le rapport entre grand axe et petit axe croît avec une valeur croissante de m et dont l'orientation (position angulaire de la valeur de crête dans des coordonnées mécaniques)

**EP 0 920 120 B1**

est une fonction linéaire de l'argument angulaire du facteur de modulation.

6. Procédé selon l'une quelconque des revendications 1 à 5, **caractérisé en ce qu'**un générateur de valeur de consigne (1) à position de phase réglable génère un vecteur de valeur de consigne de mouvement dont le lieu de transfert peut être paramétré, de telle sorte qu'il peut représenter une ellipse quelconque.

7. Procédé selon la revendication 6, **caractérisé en ce que** le vecteur de valeur de consigne de mouvement est comparé au vecteur de valeur réelle de mouvement mesuré et le vecteur de différence est transformé dans un système de coordonnées rotatif à position de phase réglable.

8. Procédé selon la revendication 7, **caractérisé en ce qu'**un régulateur bidimensionnel (5) qui possède un facteur de modulation complexe m en tant que grandeur de commande, qui détermine les oscillations harmoniques superposées au vecteur spatial de mode fondamental de tension, fonctionne dans le système de coordonnées rotatif.

9. Procédé selon l'une quelconque des revendications 6 à 8, **caractérisé en ce que** la position de phase du générateur de valeur de consigne ($\Delta\varphi$m) est réglée, de telle sorte que la valeur moyenne du déphasage ($\Delta\varphi$) est nulle entre la valeur de consigne et la valeur réelle du vecteur de mouvement.

10. Procédé selon l'une quelconque des revendications 6 à 8, **caractérisé en ce que** la position de phase du vecteur de mouvement de consigne est prédéfinie de manière fixe et la fréquence ($f_e$) du vecteur spatial de tension ($\Delta\varphi$m) est réglée, de telle sorte que la valeur moyenne du déphasage ($\Delta\varphi$) est nulle entre la valeur de consigne et la valeur réelle du vecteur de mouvement.

11. Appareil pour la réalisation du procédé selon l'une quelconque des revendications 1 à 8 comprenant une tête support des pièces à travailler fixée à des ressorts et entraînée avec des électroaimants qui peut être mise en oscillations orbitales dans un plan d'oscillation pour le soudage de pièces à travailler, notamment en plastique, et un changeur de fréquence alimentant les électroaimants, dans lequel le lieu de transfert du vecteur spatial de tension du changeur de fréquence alimentant le système électromécanique peut être réglé, de telle sorte que la trajectoire du mouvement elliptique souhaitée peut être atteinte, **caractérisé en ce qu'**un générateur de valeur de consigne (1) est prévu, lequel calcule le vecteur de mouvement de consigne actuel en fonction de la forme souhaitée de la courbe de trajectoire du mouvement, lequel est amené d'une part à un calculateur de phase (2) et d'autre part à un comparateur de valeur de consigne/réelle (3) qui détermine par soustraction du vecteur de mouvement mesuré à l'aide d'au moins deux capteurs d'accélération, de vitesse ou local ne se trouvant pas dans un axe du vecteur de mouvement de consigne l'écart de réglage du régulateur de courbe de trajectoire, qui est ensuite transformé (4) dans un système de coordonnées rotatif dans lequel le régulateur de courbe de trajectoire bidimensionnel (5) fonctionne, lequel calcule à partir de l'écart de réglage ainsi formé le facteur de module complexe nécessaire m afin de régler l'écart de réglage sur zéro, que la valeur de crête d'amplitude du vecteur de mouvement de consigne est comparée (6) à la valeur de crête d'amplitude du vecteur de mouvement mesuré et amenée à un régulateur d'amplitude d'oscillation (7) qui détermine l'amplitude de consigne du vecteur spatial de tension, de telle sorte que l'écart de réglage à l'entrée du régulateur d'amplitude d'oscillation devient zéro, qu'un générateur de tension de consigne (8) calcule à partir de l'amplitude de consigne du vecteur spatial de tension et du facteur de modulation m le vecteur spatial de tension actuel et l'amène à une partie de puissance (17) qui règle la tension de sortie d'un changeur de fréquence, de telle sorte qu'elle correspond au vecteur spatial de tension souhaité.

12. Appareil pour la réalisation du procédé selon la revendication 9, **caractérisé en ce qu'**un régulateur de phase (9) règle la position de phase du générateur de valeur de consigne ($\Delta\varphi$m), de telle sorte que le déphasage ($\Delta\varphi$) calculé par le calculateur de phase (2) devient en moyenne zéro.

13. Appareil pour la réalisation du procédé selon la revendication 10, **caractérisé en ce qu'**un régulateur de fréquence (10) règle la fréquence du vecteur spatial de tension ($f_e$), de telle sorte que le déphasage ($\Delta\varphi$) calculé par le calculateur de phase (2) devient en moyenne zéro.

14. Appareil pour la réalisation du procédé selon les revendications 12 et 13, **caractérisé en ce que** l'on peut passer grâce à une commutation de mode de fonctionnement (11) entre les deux régulations selon la revendication 12 et la revendication 13 en mode de fonctionnement et hors service.

Fig. 1

Fig. 2

Fig. 3

Fig. 4

EP 0 920 120 B1

Fig. 5

Fig. 6

Fig. 7A

Fig. 7B

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2539167 C3
- US 3920504 A
- EP 0504494 A2
- US 5160393 A
- DE 2539167